# EUROPEAN PATENT APPLICATION

(11) **EP 3 358 708 A1**
(43) Date of publication of application: **08.08.2018**
(21) Application number: 17154556.9
(22) Date of filing: 03.02.2017
(51) Int. Cl.: H02J 13/00

(54) **A PHOTOVOLTAIC INVERTER HAVING AN IMPROVED COMMUNICATION ARRANGEMENT WITH A REMOTE COMPUTERISED SYSTEM**

(71) Applicant: ABB Schweiz AG, 5400 Baden (CH)
(72) Inventor: TAZZARI, Davide, I-52024 Loro Ciuffenna (AR) (IT); VERNIA, Filippo, I-19121 La Spezia (SP) (IT)
(74) Representative: De Bortoli, Eros

(57) **Abstract**

A photovoltaic inverter (1) for a photovoltaic electric power generation plant, said photovoltaic inverter comprising a control unit (2) for controlling the operation of said photovoltaic inverter and a main communication port (21) for communication with a remote computerised system (30) through a main communication channel (35).

The photovoltaic inverter (1) comprises an auxiliary communication port (22) for communication with a remote computerised system (30, 40) through an auxiliary communication channel (45).

Said auxiliary communication port has a narrow band so that said control unit can transmit or receive only small-size data-sets (D1, D2) through said auxiliary communication port (22).

## Description

The present invention relates to the field of photovoltaic plants for electric power generation. More particularly, the present invention relates to a photovoltaic inverter, which includes a communication arrangement with a remote computerized system providing performances in terms of connectivity and reliability.

As is known, photovoltaic inverters are power electronic apparatuses widely used in photovoltaic electric power generation plants for performing power conversion of DC power received by one or more photovoltaic panels into AC power to be delivered to local electric loads and/or to an electric power distribution grid, according to the needs.

In many photovoltaic plants, performances of installed photovoltaic inverters are continuously monitored to collect on-the-field data (e.g. including measurement data and other useful data related to the operation of the photovoltaic panels or inverters) to be analyzed and aggregated to provide structured information related to operation of said installations. To this aim, the photovoltaic inverters are typically linked through wired or wireless wide-band communication lines to a common gateway (e.g. a data logger). This latter is linked through further wired or wireless wide-band communication lines to a remote communication system (e.g. a remote server portal).

The communication network connecting the photovoltaic inverters to the remote computerized system is a relatively complex system, as it requires the arrangement of a variety of hardware and software components for a correct operation.

Due to its intrinsic complexity, such a communication network may sometimes be subject to failures, which may cause a loss of communication between the photovoltaic inverters and the remote computerized system.

As it may be easily understood, it may be quite difficult and time-consuming to trace back the causes of these failures and take the most appropriate actions to restore a correct operation of said communication network.

As an obvious consequence, the photovoltaic inverters may remain isolated from the remote computerized system for a long time. Such an inconvenient may give raise to expensive disruptions in the management of the photovoltaic plant.

In order to solve the above-mentioned problems, the photovoltaic inverters are often configured to locally store given on-the-field data of interest when a failure in communication with the remote computerised system occurs. Said on-the-field data are then transmitted to the remote computerised system as soon as the communication with this latter is restored. Unfortunately, this solution shows some limitations in terms of efficiency and it does not provide any help to understand immediately, or even foresee, the causes of a possible failure in the communication network linking the photovoltaic inverters with the remote computerized system.

For the above illustrated reasons, in the state of the art, it is quite felt the need for simple and inexpensive solutions that ensure a given level of continuity in the monitoring activity of installed photovoltaic inverters and, at the same time, that allow collecting useful information for reacting to possible failures of the wide-band communication network linking said photovoltaic inverters to a remote computerised system.

In order to respond to this need, the present invention provides a photovoltaic inverter, according to the following claim 1 and the related dependent claims.

Characteristics and advantages of the present invention shall emerge more clearly from the description of preferred but not exclusive embodiments illustrated purely by way of example and without limitation in the attached drawings, in which:
Figures 1-2 schematically illustrate different examples of implementation of a control unit, according to the invention;
Figure 3 schematically illustrate an example of a computerised platform for monitoring the operation of one or more photovoltaic inverters.

With reference to the mentioned figures, the present invention relates to a photovoltaic inverter 1.

The photovoltaic inverter 1 is suitable for installation in a photovoltaic plant (not shown) for electric power generation at low voltage electric power distribution levels.

For the sake of clarity, it is specified that the term "low voltage" refers to operating voltages lower than 1 kV AC and 1.5 kV DC.

The photovoltaic inverter 1 has a DC port 11 intended to be electrically connected with DC electric lines (not shown) transmitting DC electric power generated by the photovoltaic panels of the photovoltaic plant and an AC port 12 intended to be electrically connected with AC electric lines (not shown) transmitting AC electric power to local electric loads and/or to an electric power distribution grid (not shown).

The photovoltaic inverter 1 has a power conversion section 13 electrically connected with the DC port 11 and the AC port 12.

The power conversion section 13 comprises suitable electric circuits to convert the DC electric power received in input at the DC port 11 into AC electric power provided in output at the AC port 12.

In general, most of the components of the photovoltaic inverter 1 (in particular the electric components 11, 12, 13 described above) may be of known type and will not be described in further details for the sake of brevity.

The photovoltaic inverter 1 comprises a control unit 2 adapted to suitably control the operation of said photovoltaic inverter, in particular of the power conversion section 13.

The control unit 2 preferably comprises one or more computerized units (e.g. microprocessors, DSPs or the like) to perform data processing functions.

Conveniently, the control unit 2 may also comprise analog electronic circuits or other electronic components (e.g. storing memories) to perform data processing functions or other requested functions to manage the operation of the photovoltaic inverter.

The photovoltaic inverter 1 comprises a main communication port 21, which is operatively coupled to the control unit 2, for example through a dedicated communication bus.

The main communication port 21 of the photovoltaic inverter 1 is arranged for communicating with a remote computerised system 30 through a main communication channel 35.

The main communication port 21 conveniently comprises analog and/or digital circuits arranged in such a way to allow a bidirectional exchange of data with an external device operatively connected thereto.

In a practical implementation of the photovoltaic inverter 1, the main communication port 21 may be circuit integrated with the control unit 2 or be realized as a separate electronic component.

The main communication port 21 is controlled by the control unit 2, which can suitably activate or deactivate it according to the needs. Obviously, when the main communication port 21 is deactivated for some reasons the communication with external devices is prevented. Preferably, in operation, the control unit 2 normally maintains activated the main communication port 21. However, the control unit 2 may deactivate the main communication port 21 in presence of faults or for blocking the flow of data from/to external devices.

Preferably, the main communication port 21 is a wide-band communication port.

In this way, in operation, the control unit 2 can transmit large-size data-sets, which include information related the operation status of the photovoltaic inverter 1, through the main communication port 21.

For the sake of clarity, a "large-size" data-set is intended as a data-set having size up to hundreds of Gbytes.

The main communication port 21 may be of the wired type, for example of the RS485, CAN, Ethernet type or the like, or of the wireless type, for example IEEE 802.15.4, ZigBee, Bluetooth, Wi-Fi, GSM, GRPS, UMTS, 3G, 4G, 5G type or the like, and it may employ a variety of communication protocols, such as TCP/IP, MODBUS, or other open or proprietary communication protocols.

The main communication channel 35 may be of the wired type, for example of the RS485, CAN, Ethernet type or the like, or of the wireless type, for example IEEE 802.15.4, ZigBee, Bluetooth, Wi-Fi, GSM, GRPS, UMTS, 3G, 4G, 5G type or the like, and it may employ a variety of communication protocols, such as TCP/IP, MODBUS, or other open or proprietary communication protocols.

Preferably, the main communication channel 35 includes a first gateway 350, for example a data-logger, which is adapted to perform suitable processing functions of the data transmitted through the communication channel 35.

Preferably, the main communication channel 35 comprises a first portion 351 linking the main communication port 21 of the photovoltaic inverter 1 with the gateway 350 and a second portion 352 linking the gateway 350 with the computerized system 30.

One or more further inverters similar to the inverter 1 may be connected to the gateway 350 through corresponding communication channels similar to the main communication channel 350.

The portions 351, 352 of the main communication channel 35 may be of different type.

As an example, the first portion 351 of the communication channel 35 may be of the RS485, CAN, Ethernet, IEEE 802.15.4 RF, ZigBee, Bluetooth type whereas the second portion 352 of the communication channel 35 may be of the Wi-Fi, GSM, GRPS, UMTS, 3G, 4G, 5G type. The portions 351, 352 of the main communication channel 35 may also employ different communication protocols.

As an example, communication protocols such as MODBUS (or other legacy or similar open communication protocol) may be used for the first portion 351 of the communication channel 35 whereas a protocol like TCIP/IP may be used for the second portion 352 of the communication channel 35.

In principle, the remote computerized system 30 may be any computerized device, such as a server, a desktop computer, a palmtop computer or a mobile computerized device of other type.

Preferably, the remote computerized system 30 is a remote server portal.

In this case, the remote computerized system may employ a single computerized unit or of several computerized units connectable to the Internet and interacting one with another, for example to implement a cloud computing architecture. As an example, such computerized units may be equipped with operating systems for devices with "server" type functionalities, for example Windows Server, Windows Azure, Mac OS Server or the like.

According to the invention, the photovoltaic inverter 1 comprises an auxiliary communication port 22, which is operatively coupled to the control unit 2, for example through a dedicated communication bus.

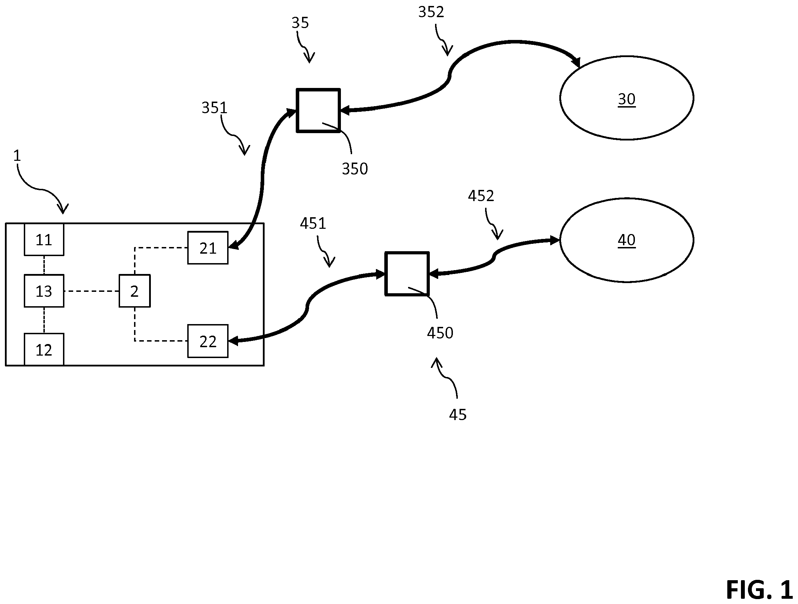

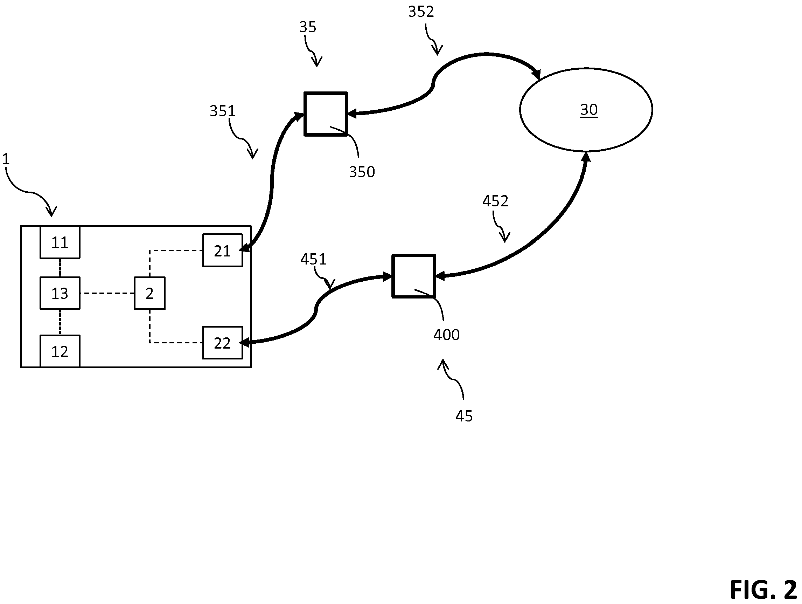

The auxiliary communication port 22 of the photovoltaic inverter 1 is arranged for communicating with a remote computerised system 30 or 40 (figure 1 and 2) through an auxiliary communication channel 45.

According to the invention, the auxiliary communication port 22 of the photovoltaic inverter 1 has a narrow band so that the control unit 2 can transmit or receive only small-size data-sets through said auxiliary communication port.

For the sake of clarity, a "small-size" data-set is intended as a data-set having a size up to few tens of bytes at most.

According to preferred embodiments of the invention, however, the auxiliary communication port 22 is an ultra-narrow-band communication port.

In this way, the control unit 2 can transmit or receive only data-sets of few bytes (e.g. 12 bytes) through said auxiliary communication port.

The auxiliary communication port 22 conveniently comprises analog and/or digital circuits arranged in such a way to allow a bidirectional exchange of data with an external device operatively connected thereto.

The auxiliary communication port 22 is controlled by the control unit 2, which can suitably activate or deactivate it according to the needs. Obviously, when the auxiliary communication port 22 is deactivated for some reasons the communication with external devices is prevented. The auxiliary communication port 22 may be of wired or wireless type, according to the needs. As an example, the auxiliary communication port 22 may be a wireless communication port employing a SigFOX, LoRA, WEIGHTLESS communication protocol.

The auxiliary communication channel 45 may be of wired or wireless type, according to the needs.

According to preferred embodiments of the invention, the auxiliary communication channel 45 comprises at least a narrow-band portion 451 interfacing with the auxiliary communication port 22.

Preferably, said at least a portion 451 of the communication channel 45 is of the ultra-narrow-band type, for example employing a SigFOX, LoRA, WEIGHTLESS communication protocol.

Preferably, the auxiliary communication channel 45 includes a second gateway 450, for example a base station, which is adapted to perform suitable processing functions of the data transmitted through the communication channel 45.

Preferably, the auxiliary communication channel 45 comprises a narrow-band first portion 451 linking the auxiliary communication port 22 of the photovoltaic inverter 1 with the gateway 450 and a second portion 452 linking the gateway 450 with the computerized system 30 or 40.

Preferably, the first portion 451 of the communication channel is of the ultra-narrow-band type, as indicated above.

The second portion 452 of the communication channel 45 may be of the same type (e.g. of a narrow-band or ultra-narrow-band type) or of different type with respect to the first portion 451.

As an example, the second portion 452 of the communication channel 45 may be of the Ethernet, Wi-Fi, GSM, GRPS, UMTS, 3G, 4G, 5G type and it may employ a TCIP/IP communication protocol.

According to some embodiments of the invention, the auxiliary communication port 22 of the photovoltaic inverter 1 is arranged for communicating with a remote computerised system 40 different from the computerised system 30 described above, as shown in figure 1.

The computerised system 40 may be any computerized device, such as a server, a desktop computer, a palmtop computer or a mobile computerized device of other type.

According to preferred embodiments of the invention (figure 2), the auxiliary communication port 22 of the photovoltaic inverter 1 is arranged for communicating with the remote computerized system 30 described above.

Preferably, in operation, the control unit 2 transmits small-size data-sets, which include information related the operation status of the photovoltaic inverter 1, through the auxiliary communication port 21.

In practice, the control unit 2 uses the auxiliary communication port 22 for transmitting small information contents related the operation status of the photovoltaic inverter 1.

Preferably, in operation, the control unit 2 normally maintains deactivated the auxiliary communication port 22 and activates it for finite time intervals only.

Conveniently, the control unit 2 activates the auxiliary communication port 22 only for the time intervals necessary for transmitting small-size data sets described above or for receiving instructions from the computerized system 30 or 40.

Preferably, in operation, the control unit 2 activates the auxiliary communication port 22 on a periodic time-base to transmit one or more first data-sets D1, which include first predefined information related the operation status of said inverter or of said plant, through said auxiliary communication port.

As an example, the control unit 2 may activate the auxiliary communication port 22 once a day to transmit basic information related the operation status of said inverter or of said plant, such as information related to the overall energy produced by the photovoltaic plant and information on the current functional state of said plant. Other information may include alarm messages, warning messages, event messages, measurement data, and the like.

Preferably, after the transmission of the first data-sets D1, the control unit 2 maintains the auxiliary communication port 22 active for a first predefined time interval T_{W1}, e.g. 5 min.

In this way, the control unit 2 can wait for possible instructions transmitted from the computerised system 30 or 40 in response to the first data-sets D1.

Preferably, if it does not receive instructions within the predefined time interval T_{W1}, the control unit 2 deactivates the auxiliary communication port 22. In this case, preferably, the control unit 2 will again activate the auxiliary communication port 22, according to the predefined schedule time-base mentioned above.

Preferably, if it receives instructions within the predefined time interval T_{W1}, the control unit 2 carries out one or more requested tasks in response to the received instructions.

Preferably, the above mentioned requested tasks include the immediate or delayed transmission of one or more second data-sets D2, which include second information related the operation status of said inverter or of said plant, through the auxiliary communication port 22.

As an example, in response to the instructions received within the predefined time interval T_{W1}, the control unit 2 may immediately transmit the second data-sets D2 through the auxiliary communication port 22. After the transmission of the second data-sets D2 the control unit 2 may wait for further instructions or deactivate the communication port 2 waiting for the next activation that will be carried out according to the predefined schedule time-base mentioned above.

As a further example, in response to the instructions received within the predefined time interval T_{W1}, the control unit 2 may immediately deactivate the communication port 2, wait for a requested delay time and then again activate the communication port 2 to transmit the second data-sets D2.

The second data-sets D2 may include further information related to the power conversion process, for example information related to active and reactive power set-points of the photovoltaic inverter, the operative parameters or the photovoltaic inverter, alarms related to the photovoltaic inverter or the photovoltaic plant, and the like. Other information may include data related to the residual available traffic through mobile communication channels (3G, 4G, 5G, and so on) in case of prepaid services.

The second data-sets D2 may further include information related to the operative status of the control unit 2, such as information related to absence of connectivity through the main communication port 21, unavailability of the main communication channel 35, changes in the communication parameters with the main communication channel 35, amount of stored on-the field data in case of absence of connectivity through the main communication port 21, and the like.

Preferably, the above mentioned requested tasks include the activation of the auxiliary communication port 22 at a requested time and for a further predefined time interval T_{W2} to receive further instructions through said auxiliary communication port.

As an example, in response to the instructions received within the predefined time interval T_{W1}, the control unit 2 may immediately deactivate the communication port 2 and then again activate the communication port 2 at the requested time to receive further instructions from the computerised system 30 or 40 (call-back functionality).

Preferably, the above mentioned requested tasks include control tasks related to the management of its operation status or of the operation status of the photovoltaic inverter.

As an example, in response to the instructions received within the predefined time interval T_{W1}, the control unit 2 may activate, deactivate, lock or unlock the main communication port 21 or provide specific control signals to the power conversion section 13 of the photovoltaic inverter to set-up the operation of said power conversion section.

From the above, it is evident that the computerized unit 2, the remote computerized system 30 and the communication channels 35, 45 form a computerised platform 100 for monitoring the operation of the photovoltaic inverter 1.

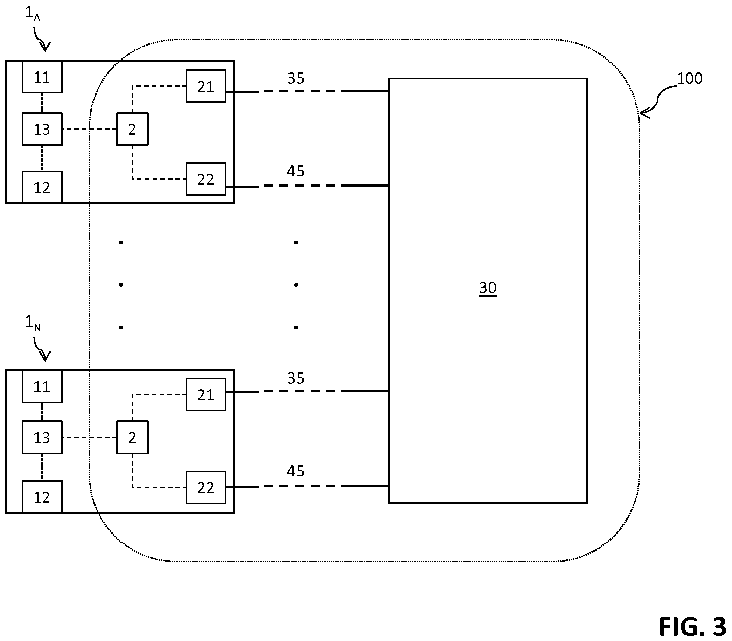

In a more general aspect, as shown in figure 3, the present invention thus relates also to a computerised platform 100 for monitoring the operation of one or more photovoltaic inverters 1_{A}...1_{N} (N>=1), according to the invention.

The computerised platform 100 comprises a remote computerised system 30 and the control units 2 of the photovoltaic inverters 1, which are configured to control the operation of these latter.

For each photovoltaic inverter, the computerised platform 100 comprises a main communication port 21 of said inverter and a main communication channel 35 linking the main communication port 21 and the remote computerised system 30.

For each photovoltaic inverter, the computerised platform 100 comprises a narrow-band auxiliary communication port 22 of said inverter and a narrow-band auxiliary communication channel 45 linking the auxiliary communication port 22 of the photovoltaic inverters 1 and the remote computerised system 30.

Preferably, the auxiliary communication ports 22 and the auxiliary communication channels 45 are of the ultra-narrow-band type.

The photovoltaic inverter 1, according to the invention, provides relevant advantages with respect to the apparatuses of the state of the art.

The photovoltaic inverter 1 comprises a narrow-band auxiliary communication port 22 in conjunction with the main communication port 21 to communicate with an external computerized system 30 and 40.

In the photovoltaic inverter 1, the auxiliary communication port 22 may be used as a back-up communication port to be used for data transmission when the photovoltaic inverter cannot communicate, for same reasons, with the computerized system 30 through the main communication port 21.

This feature ensures a minimum level of continuity in the monitoring activity of the performances of the photovoltaic inverter 1.

In fact, the photovoltaic inverter 1 can transmit information related to its operative status even a communication through the main communication port 21 is not possible for some reasons. Therefore, isolation from the computerized system 30 is prevented.

The auxiliary communication port 22 may be used as an emergency communication port to be used to acquire some information related to the operative status of the photovoltaic inverter, more related to the operative status of the main communication port 21 and of the main communication channel 35 linked thereto, when the photovoltaic inverter 1 cannot communicate, for same reasons, with the computerized system 30 through the main communication port 21.

This feature allows collecting information to properly react to a fault in the main communication network linking the photovoltaic inverter 1 with the computerized system 30. The auxiliary communication port 22 may also be used for implementing some specific functionalities in managing the operation of the photovoltaic inverter, such as controlling the access to the photovoltaic inverter 1 through the main communication port 21.

The arrangement of the auxiliary communication port 22 is relatively simple and cheap to provide in practice, as the communication port 22 is of the narrow-band type and is intended to remain deactivated for most of the time.

The photovoltaic inverter 1 is thus of relatively easy industrial realization, at competitive costs with the photovoltaic inverters of the state of the art.

## Claims

1. A photovoltaic inverter (1) for a photovoltaic electric power generation plant, said photovoltaic inverter comprising a control unit (2) for controlling the operation of said photovoltaic inverter and a main communication port (21) for communication with a remote computerised system (30) through a main communication channel (35) **characterised in that** it comprises an auxiliary communication port (22) for communication with a remote computerised system (30, 40) through an auxiliary communication channel (45), said auxiliary communication port having a narrow band so that said control unit can transmit or receive only small-size data-sets (D1, D2) through said auxiliary communication port (22).

2. A photovoltaic inverter, according to claim 1, **characterised in that** said control unit (2) is configured to transmit small-size data-sets (D1, D2) including information related the operation status of said inverter or of said plant through said auxiliary communication port (22).

3. A photovoltaic inverter, according to one or more of the previous claims, **characterised in that** said control unit (2) is configured to normally maintain deactivated said auxiliary communication port (22) and to activate said auxiliary communication port for finite time intervals only.

4. A photovoltaic inverter, according to claim 3, **characterised in that** said control unit (2) is configured to activate said auxiliary communication port (22) on a periodic time-base to transmit one or more first data-sets (D1), which include first predefined information related the operation status of said inverter or of said plant, through said auxiliary communication port.

5. A photovoltaic inverter, according to claim 4, **characterised in that** said control unit (2) is configured to maintain said auxiliary communication port (22) active for a predefined time interval (T_{W1}) after the transmission of said one or more first data-sets (D1).

6. A photovoltaic inverter, according to claim 5 **characterised in that** said control unit (2) is configured to deactivate said auxiliary communication port (22) if no instructions are received within said predefined time interval (T_{W1}).

7. A photovoltaic inverter, according to claim 5, **characterised in that** said control unit (2) is configured to carry out one or more requested tasks in response to instructions received within said predefined time interval (T_{W1}).

8. A photovoltaic inverter, according to claim 7, **characterised in that** said requested tasks include the immediate or delayed transmission of one or more second data-sets (D2), which include second information related the operation status of said inverter or of said plant, through said auxiliary communication port.

9. A photovoltaic inverter, according to one or more of the claims from 7 to 8, **characterised in that** said requested tasks include the activation of said auxiliary communication port (22) at a requested time and for a further predefined time interval (T_{W2}) to receive further instructions through aid auxiliary communication port.

10. A photovoltaic inverter, according to one or more of the claims from 7 to 9, **characterised in that** said requested tasks include control tasks related to the management of the operation of said control unit and/or said inverter.

11. A photovoltaic inverter, according to one or more of the previous claims, **characterised in that** said main communication port (21) is a wide-band communication port.

12. A photovoltaic inverter, according to one or more of the previous claims, **characterised in that** said auxiliary communication port (22) is an ultra-narrow-band communication port.

13. A computerised platform (100) for monitoring the operation of one or more photovoltaic inverters (1_{A}, 1_{N}), according to one or more of the claims from 1 to 12, **characterised in that** it comprises:
- a remote computerised system (30);
- one or more control units (2) comprised in said photovoltaic inverters to control the operation of said photovoltaic inverters;
- for each photovoltaic inverter, a main communication port (21) of said photovoltaic inverter and a main communication channel (35) linking said main communication port (21) and said remote computerised system;
- for each photovoltaic inverter, a narrow-band auxiliary communication port (22) of said photovoltaic inverter and a narrow-band auxiliary communication channel (45) linking said auxiliary communication port (22) and said remote computerised system.
